# EUROPEAN PATENT APPLICATION

(11) **EP 4 832 128 A1**
(43) Date of publication of application: **28.10.2026**
(21) Application number: 24907828.8
(22) Date of filing: 22.11.2024
(51) Int. Cl.: H01M 10/052, H01M 4/131, H01M 4/134, H01M 4/133, H01M 4/525, H01M 4/505, H01M 4/36, H01M 4/38, H01M 4/587, H01M 4/02

(54) **LITHIUM SECONDARY BATTERY**

(30) Priority: 20.12.2023 KR 20230187241
(71) Applicant: SK On Co., Ltd., Seoul 03161 (KR)
(72) Inventor: HWANG, Duck Chul, Daejeon 34124 (KR); KIM, Jong Hwa, Daejeon 34124 (KR); MOON, Joon Hyung, Daejeon 34124 (KR)
(74) Representative: Stolmár & Partner Patentanwälte PartG mbB
(86) International application number: PCT/KR2024/018603
(87) International publication number: WO 2025/135543

(57) **Abstract**

A lithium secondary battery according to the embodiments of the present disclosure may include: a cathode including a lithium metal oxide having a form of secondary particles in which a plurality of primary particles are agglomerated, and a cathode active material doped with a cathode doping element; and an anode including an anode active material including a silicon-based active material containing a silicon oxide and a carbon-based active material, and disposed opposite the cathode. The aspect ratio of the primary particles may be 1.4 to 7.0, and the content of the silicon-based active material based on the total weight of the anode active material may be 1 wt% to 50 wt%.

## Description

### [Technical Field]

The present disclosure relates to a lithium secondary battery, and more specifically, to a lithium secondary battery including a cathode and an anode.

### [Background Art]

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, the lithium secondary battery has been actively researched and developed due to its high operating voltage, high energy density per unit weight, and advantages in charging speed and weight reduction.

The lithium secondary battery may include: an electrode assembly including a cathode, an anode, and a separation membrane (separator); and an electrolyte that impregnates the electrode assembly. The lithium secondary battery may further include, for example, a pouch-type outer case that accommodates the electrode assembly and the electrolyte.

For example, a lithium metal oxide may be used as the cathode active material in the cathode. When the battery is repeatedly charged and discharged, damage to the surface of the cathode active material may occur, and side reactions with the electrolyte may be caused.

For example, carbon-based or silicon-based active material particles may be used as the anode active material in the anode. When the battery is repeatedly charged and discharged, mechanical or chemical damage, such as cracking of the particles, may occur in the anode active material, and deterioration of contact between the active material particles and short-circuit problems may occur.

### [Summary of Invention]

### [Problems to be Solved by Invention]

An object of the present disclosure is to provide a lithium secondary battery having improved cycle life characteristics and output characteristics.

### [Means for Solving Problems]

A lithium secondary battery according to exemplary embodiments of the present disclosure may include: a cathode including a lithium metal oxide having a form of secondary particles in which a plurality of primary particles are agglomerated, and a cathode active material doped or coated with a cathode doping element; and an anode including an anode active material including a silicon-based active material containing a silicon oxide and a carbon-based active material, and disposed opposite the cathode. The aspect ratio of the primary particles may be 1.4 to 7.0. The content of the silicon-based active material based on the total weight of the anode active material may be 1 % by weight to 50 % by weight.

In some embodiments, the aspect ratio of the primary particles may be 1.53 to 5.02.

In some embodiments, the lithium metal oxide may include nickel, and the mole fraction of nickel based on the total molar amount of all elements excluding lithium and oxygen in the lithium metal oxide may be 0.5 to 0.99.

In some embodiments, the mole fraction of nickel based on the total molar amount of all elements excluding lithium and oxygen in the lithium metal oxide may be 0.6 to 0.94.

In some embodiments, the cathode doping element may include at least one of Al, Ti, Zr, Ba, Sr, W, Nb, Y, Mg, V, Ta, Mo, La and B.

In some embodiments, the cathode doping element may include at least one of Ti, Zr, Ba, Sr, W, Nb and Ta.

In some embodiments, two or more of cathode doping elements may be used in combination.

In some embodiments, the content of the cathode doping element based on the total weight of the lithium metal oxide may be 100 ppm to 15,000 ppm.

In some embodiments, the content of the cathode doping element based on the total weight of the lithium metal oxide may be 2,000 ppm to 12,000 ppm.

In some embodiments, the silicon oxide may be doped or coated with an anode doping element.

In some embodiments, the anode doping element may include at least one of Li, Mg, Al, Ca, Fe, Ti, P and V.

In some embodiments, the anode doping element may include at least one of Li and Mg.

In some embodiments, the silicon oxide may include at least one of lithium silicate (Li₂SiO₃), lithium disilicate (Li₂Si₂O₅), magnesium silicate (MgSiO₃), and magnesium orthosilicate (Mg₂SiO₄).

In some embodiments, the content of the silicon-based active material based on the total weight of the anode active material may be 1 % by weight to 40 % by weight.

### [Advantageous effects]

The lithium secondary battery according to the exemplary embodiments of the present disclosure may have improved cycle life characteristics and capacity characteristics.

In the lithium secondary battery according to the exemplary embodiments, a lithium metal oxide doped with a doping element may be used as the cathode active material. The doping element may suppress structural degradation of the cathode active material during charging and discharging. Accordingly, the degradation in cycle life characteristics and capacity characteristics caused by damage to the cathode active material may be suppressed.

In the lithium secondary battery according to the exemplary embodiments, both a silicon-based active material and a carbon-based active material may be used as the anode active material. Accordingly, the degradation in cycle life and capacity characteristics caused by expansion of the silicon-based active material may be suppressed. In addition, the low capacity characteristics of the carbon-based active material may be improved by the silicon-based active material.

### [Brief Description of Drawings]

FIGS. 1 and 2 are a schematic plan view and a schematic cross-sectional view, respectively, illustrating a lithium secondary battery according to exemplary embodiments.
FIGS. 3 to 5 are images of cross-sections of cathode active material particles according to exemplary embodiment, captured using a scanning electron microscope (SEM).

### [Mode for Carrying out Invention]

According to exemplary embodiments of the present disclosure, there is provided a lithium secondary battery including: a cathode including a lithium metal oxide having a form of secondary particles in which a plurality of primary particles are agglomerated; and an anode including a silicon-based active material and a carbon-based active material.

Hereinafter, the present disclosure will be described in detail with reference to the accompanying drawings. However, the following description is merely illustrative, and the present disclosure is not limited to the specific embodiments described herein by way of example.

Hereinafter, otherwise defined herein, when a portion such as a layer, film, thin film, region, or plate, etc. is present "on" or "above" another portion, it may include not only the case where the portion is present "directly on" the other portion, but also the case where another portion is present between them.

The terms "first" and "second" used herein are not intended to limit the number or order of objects modified by "first" and "second," but rather are used solely to distinguish different modified objects from each other.

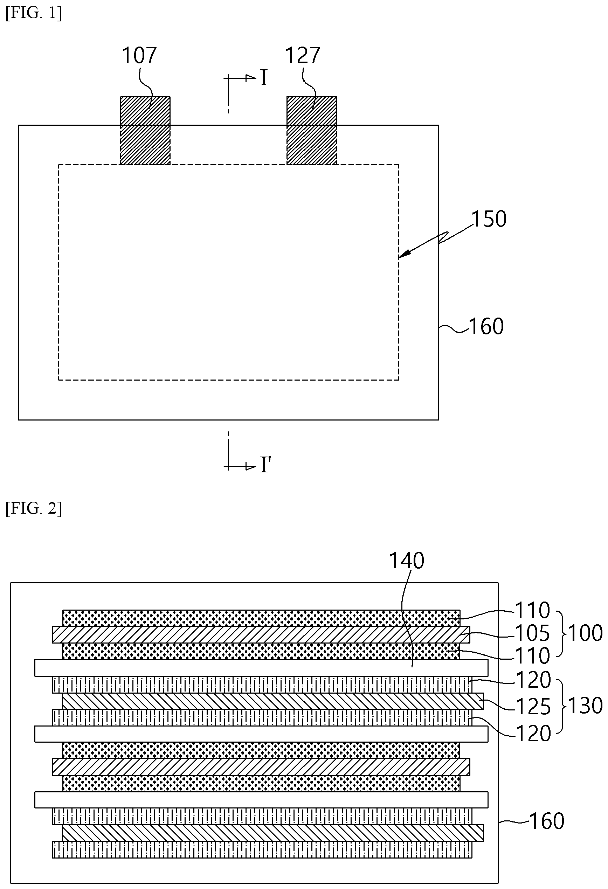

FIGS. 1 and 2 are a schematic plan view and a schematic cross-sectional view, respectively, illustrating the lithium secondary battery according to exemplary embodiments. FIG. 2 is a cross-sectional view taken along line I-I' of FIG. 1 in a thickness direction.

Referring to FIGS. 1 and 2, the lithium secondary battery may include a cathode 100, an anode 130 disposed opposite the cathode 100, and a separator 140 interposed between the cathode 100 and the anode 130.

The cathode 100 may include a cathode current collector 105 and a cathode active material layer 110 disposed on at least one surface of the cathode current collector 105.

The cathode current collector 105 may include stainless steel, nickel, aluminum, titanium, or an alloy thereof. The cathode current collector 105 may also include aluminum or stainless steel having a surface treated with carbon, nickel, titanium or silver. For example, the cathode current collector 105 may have a thickness of 10 µm to 50 µm.

The cathode active material layer 110 may include a cathode active material. The cathode active material may include a compound capable of reversibly intercalating and deintercalating lithium ions.

According to exemplary embodiments, the cathode active material may include a lithium metal oxide having a form of secondary particles in which a plurality of primary particles are agglomerated.

According to exemplary embodiments, the aspect ratio of the primary particles may be 1.4 to 7.0.

If the aspect ratio of the primary particles is less than 1.4, the primary particles may not be stably agglomerated. For example, cracks may occur in the secondary particles during repeated cycle life tests, which may increase the occurrence of gaps or pores within the secondary particles in which primary particles were agglomerated, thereby reducing structural stability. Accordingly, the cycle life characteristics of the cathode active material may be degraded.

If the aspect ratio of the primary particles exceeds 7.0, the length of a major axis, which is a migration path of lithium ions, may be excessively increased, thereby degrading the output characteristics.

The primary particle may be morphologically distinguished from the secondary particle. For example, the secondary particle may refer to a particle in which a plurality of primary particles are agglomerated and are observed or regarded as substantially one particle. For example, in a cross-sectional image of the secondary particle measured using a scanning electron microscope (SEM), boundaries of the primary particles may be observed.

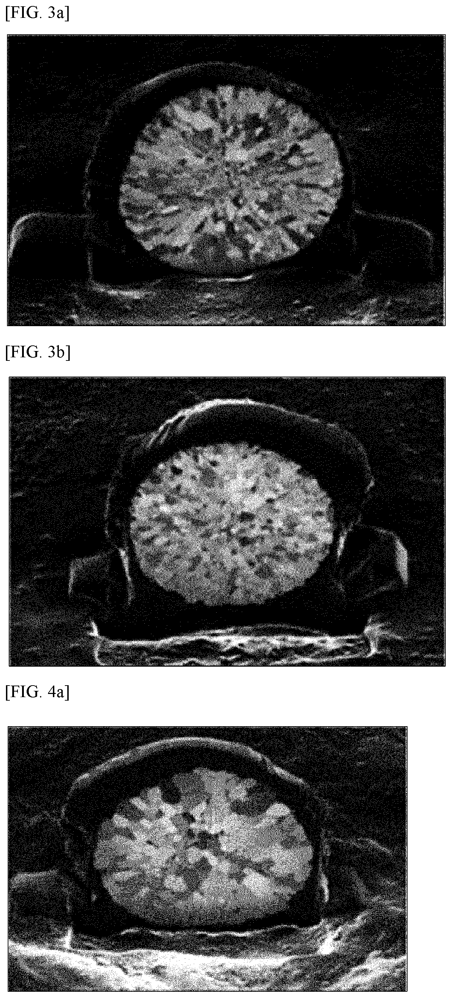

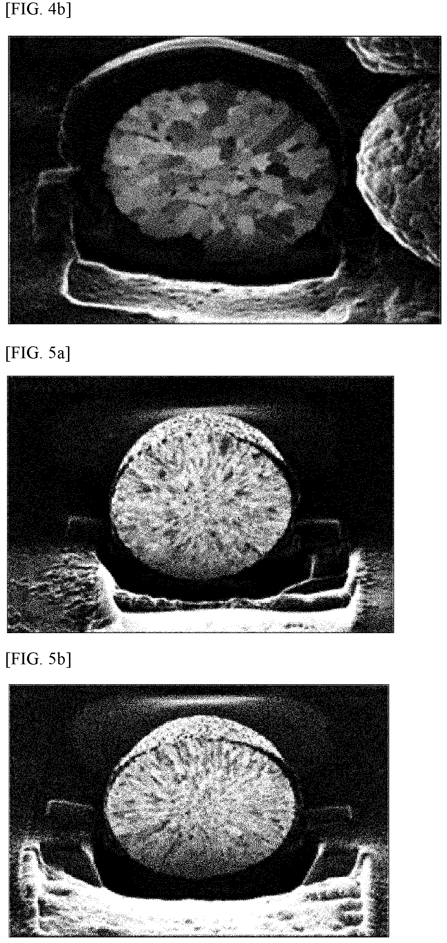

FIGS. 3 to 5 are images of cross-sections of cathode active material particles according to exemplary embodiments, captured using a scanning electron microscope (SEM). Specifically, FIGS. 3A and 3B are SEM images of cross-sections of any two cathode active material particles among cathode active material particles having a secondary particle structure in which primary particles with an aspect ratio of 2.58 are agglomerated, respectively. FIGS. 4A and 4B are SEM images of cross-sections of any two cathode active material particles among cathode active material particles having a secondary particle structure in which primary particles with an aspect ratio of 1.42 are agglomerated, respectively. FIGS. 5A and 5B are SEM images of cross-sections of any two cathode active material particles among cathode active material particles having a secondary particle structure in which primary particles with an aspect ratio of 6.51 are agglomerated, respectively.

Referring to FIGS. 3 to 5, it can be seen that when the aspect ratio of the primary particles is 1.42 to 6.51, the primary particles stably agglomerate to form secondary particles.

As used herein, the term "aspect ratio" refers to a ratio of the length of a major axis to the length of a minor axis of the primary particle. For example, the aspect ratio refers to a ratio of the longest diameter length to the shortest diameter length among diameter lengths of the cross-sections of the primary particles. For example, the closer the aspect ratio is to 1, the more spherical the particle appears, and the larger the aspect ratio, the more rod-shaped the particle appears.

In some embodiments, the aspect ratio of the primary particles may be 1.42 to 7.0, or 1.42 to 6.51. Within this range, the primary particles may agglomerate to stably form secondary particles. Accordingly, the collapse of the secondary particle structure in the cathode active material during repeated charging and discharging of the battery may be suppressed, thereby improving both cycle life characteristics and output characteristics.

In some embodiments, the aspect ratio of the primary particles may be 1.5 to 6.51, 1.53 to 6.51, 2.0 to 6.51, 2.58 to 6.51, 2.58 to 6.0, or 2.58 to 5.02. Within this range, the cycle life characteristics and output characteristics may be further improved.

In exemplary embodiments, the cathode active material may include a lithium metal oxide. For example, the primary particles may be a lithium metal oxide, and the secondary particles formed by the agglomeration of the primary particles may also be a lithium metal oxide.

In some embodiments, the cathode active material or the lithium metal oxide may include nickel. For example, the cathode active material or the lithium metal oxide may include a layered structure or a crystal structure represented by Formula 1 below.

[Formula 1] LiₓNiₐM_{b}O_{2+z}

In Formula 1, x, a, b and z may satisfy 0.8≤x≤1.2, 0.5≤a≤0.99, 0.01≤b≤0.5, and - 0.2≤z≤0.2, and a+b=1. M may include Co, Mn and/or Al.

The chemical structure represented by Formula 1 indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act, for example, as an auxiliary active element that contributes to the output activity of the cathode active material together with Co or Mn, such as Al.

For example, the cathode active material or the lithium metal oxide may include a layered structure or a crystal structure represented by Formula 1-1 below.

[Formula 1-1] LiₓNiₐM1_{b1}M2_{b2}O_{2+z}

In Formula 1-1, M1 may include Co, Mn and/or Al. M2 may include the above-described auxiliary elements. In Formula 1-1, x, a, b1, b2 and z may satisfy 1, 0.8≤x≤1.2, 0.5≤a≤0.99, 0.1≤b1+b2≤0.5, -0.2≤z≤0.2, and a+b1+b2=1.

The cathode active material may include a nickel-cobalt-manganese (NCM)-based lithium oxide. In this case, an NCM-based lithium oxide having an increased content of nickel may be used.

Nickel (Ni) may serve as a transition metal associated with the output and capacity of the lithium secondary battery. Therefore, as described above, by employing a high-nickel-content (high-Ni) composition in the cathode active material, a high-capacity cathode and a high-capacity lithium secondary battery may be provided.

However, as the Ni content increases, the long-term storage stability and cycle life stability of the cathode or the secondary battery may be relatively reduced, and side reactions with the electrolyte may also increase. Nevertheless, according to exemplary embodiments, by including Co, the cycle life stability and capacity retention characteristics may be improved by Mn, while electrical conductivity is maintained.

In some embodiments, the mole fraction of nickel (e.g., the mole fraction of nickel based on the total molar amount of nickel, cobalt and manganese) based on the total molar amount of all elements excluding lithium and oxygen in the lithium metal oxide may be 0.5 to 0.99, 0.5 to 0.98, or 0.6 to 0.98. Within this range, both the output characteristics and cycle life characteristics of the cathode active material may be improved. For example, while the capacity characteristics are improved by the nickel element, the structural stability of the remaining elements excluding nickel may also be improved. For example, the amount of lithium metal oxide used may be reduced as the capacity characteristics are improved by increasing the content of the nickel element. Therefore, the thickness of the electrode (e.g., the cathode) may be reduced, and the output characteristics may be improved.

In one embodiment, the mole fraction of nickel (e.g., the mole fraction of nickel based on the total molar amount of nickel, cobalt and manganese) based on the total molar amount of all elements excluding lithium and oxygen in the lithium metal oxide may be 0.6 to 0.98, 0.6 to 0.94, or 0.7 to 0.94. Within this range, the output characteristics of the cathode active material may be further improved.

In exemplary embodiments, the cathode active material (e.g., the lithium metal oxide) may further include a coating element or a doping element. In one embodiment, the coating element or the doping element may penetrate into the primary particles and be located therein. In one embodiment, the coating element or the doping element may be formed on the surface of the primary particles (e.g., between the primary particles). In one embodiment, the coating element or the doping element may be located on the surface of a secondary particle in which the primary particles are agglomerated.

In some embodiments, the doping element or the coating element may include at least one of Al, Ti, Zr, Ba, Sr, W, Nb, Y, Mg, V, Ta, Mo, La and B. Accordingly, the structural stability of the primary particles or the secondary particles in which the primary particles are agglomerated may be improved due to the doping element, thereby improving the cycle life characteristics. In addition, the electrical conductivity of the cathode active material may be improved, thereby improving the output characteristics.

In one embodiment, the doping element or the coating element may include at least one of Ti, Zr, Ba, Sr, W, Nb and Ta. Accordingly, the cycle life characteristics and output characteristics of the cathode active material may be further improved.

In some embodiments, two or more of the doping element or the coating element may be used in combination. For example, as the doping element or the coating element, combinations of Al and Y, Zr and Mo, Sr and W, Nb and Ti, Mg and B, Ta and Ba, or La and V may be used. Accordingly, the cycle life characteristics and output characteristics of the cathode active material may be further improved.

In one embodiment, three elements of the doping element or the coating element may be used in combination. For example, a combination of Ti, Sr and Y, or Al, Zr and W may be used. Accordingly, the cycle life characteristics and output characteristics of the cathode active material may be further improved.

In some embodiments, the content of the doping element or the coating element based on the total weight of the cathode active material (e.g., the lithium metal oxide) may be 100 ppm to 15,000 ppm, 300 ppm to 15,000 ppm, or 1,000 ppm to 14,000 ppm. Within this content range, the doping element or the coating element may be located while maintaining an appropriate spacing. Accordingly, the electrical conductivity of the cathode active material may be improved while suppressing side reactions caused by the doping element or the coating element. Thus, the cycle life characteristics and output characteristics may be improved.

In one embodiment, the content of the doping element or the coating element based on the total weight of the cathode active material (e.g., the lithium metal oxide) may be 2,000 ppm to 12,000 ppm, 2,000 ppm to 10,000 ppm, 2,000 ppm to 8,000 ppm, 2,000 ppm to 6,000 ppm, or 2,000 ppm to 4,000 ppm. Within this content range, the output characteristics and cycle life characteristics of the cathode active material may be further improved.

In some embodiments, the cathode active material may further include a lithium cobalt oxide-based active material, a lithium manganese oxide-based active material, a lithium nickel oxide-based active material, or a lithium metal phosphate-based active material (e.g., LiFePO₄) together with the lithium metal oxide.

In some embodiments, the cathode active material may further include, together with the lithium metal oxide, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 2 below.

[Formula 2] p[Li₂MnO₃]·(1-p)[Li_{q}JO₂]

In Formula 2, p and q may satisfy 0<p<1 and 0.9≤q≤1.2, and J may include at least one element among Mn, Ni, Co, Fe, Cr, V, Cu, Zn, Ti, Al, Mg and B.

For example, a cathode slurry may be prepared by mixing the above-described cathode active material in a solvent. The cathode slurry may be applied to the cathode current collector 105, and then dried and roll-pressed to prepare the cathode active material layer 110. The coating process may be performed using methods such as gravure coating, slot die coating, simultaneous multilayer die coating, imprinting, doctor blade coating, dip coating, bar coating or casting, or the like, but is not limited thereto. The cathode active material layer 110 may further include a binder, and optionally may further include, a conductive material, a thickener or the like.

Non-limiting examples of the solvent used in the preparation of the cathode active material layer 110 may include N-methyl-2-pyrrolidone (NMP), dimethylformamide, dimethylacetamide, N,N-dimethylaminopropylamine, ethylene oxide, tetrahydrofuran and the like.

The binder may include polyvinylidene fluoride (PVDF), poly(vinylidene fluorideco-hexafluoropropylene), polyacrylonitrile, polymethyl methacrylate, acrylonitrile butadiene rubber (NBR), poly(butadiene) rubber (BR), styrene-butadiene rubber (SBR) and the like. In one embodiment, a PVDF-based binder may be used as the cathode binder.

The conductive material may be added to the cathode active material layer 110 to enhance the conductivity thereof and/or the mobility of lithium ions or electrons. For example, the conductive material may include carbon-based conductive materials such as graphite, carbon black, acetylene black, Ketjen black, graphene, carbon nanotubes, vapor-grown carbon fibers (VGCF), and carbon fibers; and/or metal-based conductive materials such as tin, tin oxide, and titanium oxide; as well as perovskite materials such as LaSrCoO₃, and LaSrMnO₃, but is not limited thereto.

The cathode active material layer 110 may further include a thickener and/or a dispersant. For example, the cathode active material layer 110 may include a thickener such as carboxy methyl cellulose (CMC).

The anode 130 may include an anode current collector 125, and an anode active material layer 120 formed on at least one surface of the anode current collector 125.

Non-limiting examples of the anode current collector 125 may include copper foil, nickel foil, stainless steel foil, titanium foil, nickel foam, copper foam, or a polymer substrate coated with a conductive metal. The anode current collector 125 may have, for example, a thickness of 10 µm to 50 µm, but is not limited thereto.

The anode active material layer 120 may include an anode active material. As the anode active material, a material capable of adsorbing and desorbing lithium ions may be used.

According to exemplary embodiments, the anode active material may include a silicon-based active material and a carbon-based active material. Capacity characteristics may be improved depending on the silicon-based active material included in the anode active material, and cycle life characteristics may be improved depending on the carbon-based active material included in the anode active material.

In some embodiments, the silicon-based active material may include a silicon oxide. For example, the silicon oxide may be SiOₓ(0<x<2). The SiOₓ(0<x<2) may have a high theoretical capacity and may exhibit improved stability due to reduced volume change during charging and discharging compared to pure silicon (Si).

In some embodiments, the silicon oxide may be doped with an anode doping element or coated with an anode coating element. For example, the silicon oxide may be SiOₓ(0<x<2) doped with an anode doping element or SiOₓ(0<x<2) coated with an anode coating element. Accordingly, the cycle life characteristics of the anode active material may be further improved.

In some embodiments, the anode doping element or the anode coating element may include at least one of Li, Ma, Al, Ca, Fe, Ti, P and V. The anode doping element or the anode coating element may be located, for example, within the lattice structure of the silicon oxide. Accordingly, the electrical conductivity of the silicon oxide may be improved by the anode doping element or the anode coating element, and the charge and discharge cycle life may be improved. In addition, the volume expansion of the silicon oxide during charging and discharging may be suppressed by the anode doping element or the anode coating element, thereby improving the cycle life characteristics.

In one embodiment, the anode doping element or the anode coating element may include at least one of Li and Mg. Accordingly, the cycle life characteristics may be further improved.

In some embodiments, the silicon oxide may include at least one of lithium silicate (Li₂SiO₃), lithium disilicate (Li₂Si₂O₅), magnesium silicate (MgSiO₃), and magnesium orthosilicate (Mg₂SiO₄). The compound may have a stable structure in which Li or Mg is doped into the silicon oxide. Accordingly, the cycle life characteristics and charge and discharge capacity may be further improved.

In some embodiments, the silicon-based active material may include an additional material containing silicon. For example, the silicon-based active material may include silicon (Si), silicon-carbon composites and the like.

In some embodiments, the carbon-based active material may include crystalline carbon, amorphous carbon, carbon composites, carbon fibers and the like.

For example, the amorphous carbon may include hard carbon, soft carbon, coke, mesocarbon microbead (MCMB), mesophase pitch-based carbon fiber (MPCF) or the like.

For example, the crystalline carbon may include graphitic carbon such as natural graphite, artificial graphite, graphitized coke, graphitized MCMB, graphitized MPCF or the like.

For example, the carbon-based active material may include activated carbon, carbon nanotubes (CNT), carbon nanowires, graphene, carbon fibers, carbon black, graphite, porous carbon including microporous carbon, mesoporous carbon, and macroporous carbon, pyrolytic cryogel, pyrolytic xerogel, pyrolytic aerogel and the like.

In some embodiments, the anode active material may include an additional anode active material in addition to the silicon-based active material and the carbon-based active material. For example, the anode active material may further include lithium metal, a lithium alloy, a tin (Sn)-containing material and the like. The lithium metal may be pure lithium metal or lithium metal with a protective layer formed thereon for inhibiting dendrite growth and the like.

According to exemplary embodiments, the content of the silicon-based active material based on the total weight of the anode active material may be 1 % by weight ("wt%") to 50 wt%.

When the silicon-based active material is included in the anode active material, the capacity characteristics may be improved, but the cycle life characteristics may be degraded. The degradation in cycle life characteristics may be suppressed by doping (or coating) the cathode active material with a doping element (or a coating element). However, if the content of the silicon-based active material based on the total weight of the anode active material is less than 1 wt%, the effect of improving cycle life characteristics by the cathode active material with the doping element (or the coating element) introduced may not be significant.

If the content of the silicon-based active material based on the total weight of the anode active material exceeds 50 wt%, the content of the silicon-based active material may increase, thereby leading to an increase in the volume expansion rate of the anode active material. Accordingly, cracks may occur in the anode active material, thereby leading to a degradation in the cycle life characteristics.

In some embodiments, the content of the silicon-based active material based on the total weight of the anode active material may be 1 wt% to 45 wt%, 1 wt% to 40 wt%, 1 wt% to 35 wt%, or 1 wt% to 30 wt%. Within this content range, both the capacity characteristics and cycle life characteristics may be improved.

For example, the anode active material may be mixed in a solvent to prepare an anode slurry. The anode slurry may be coated or deposited on the anode current collector 125, and then dried and roll-pressed to prepare the anode active material layer 120. The coating process may be performed using methods such as gravure coating, slot die coating, simultaneous multilayer die coating, imprinting, doctor blade coating, dip coating, bar coating or casting, or the like, but is not limited thereto. The anode active material layer 120 may further include a binder, and optionally may further include a conductive material, a thickener or the like.

Non-limiting examples of solvents for the anode active material layer 120 may include water, purified water, deionized water, distilled water, ethanol, isopropanol, methanol, acetone, n-propanol, t-butanol and the like.

The above-described materials that can be used when preparing the cathode as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene) (PEDOT)-based binder, and the like may be used as an anode binder.

The separator 140 may be interposed between the cathode 100 and the anode 130. The separator 140 may be configured to prevent an electrical short-circuit between the cathode and the anode, and to allow the flow of ions. For example, the separator 140 may have a thickness of 10 µm to 20 µm, but the present disclosure is not limited thereto.

For example, the separator 140 may include a porous polymer film or a porous nonwoven fabric. The porous polymer film may include a polyolefin-based polymer such as an ethylene polymer, a propylene polymer, an ethylene/butene copolymer, an ethylene/hexene copolymer, or an ethylene/methacrylate copolymer, etc. The porous nonwoven fabric may include glass fibers having a high melting point, polyethylene terephthalate fibers, etc. The separator 140 may also include a ceramic-based material. For example, inorganic particles may be coated on the polymer film or dispersed within the polymer film to improve heat resistance.

The separator 140 may have a single-layer or multilayer structure including the above-described polymer film and/or non-woven fabric.

According to exemplary embodiments, the cathode 100, the anode 130, and the separator 140 may be repeatedly disposed to form an electrode assembly 150. In some embodiments, the electrode assembly 150 may be a winding type, a stacking type, a z-folding type, or a stacked-folding type.

The electrode assembly 150 may be accommodated in a case 160 together with the electrolyte to define a lithium secondary battery. According to exemplary embodiments, a non-aqueous electrolyte may be used as the electrolyte.

The non-aqueous electrolyte includes a lithium salt as an electrolyte and an organic solvent, wherein the lithium salt may be represented as Li⁺X⁻, for example, and as an anion (X⁻) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be exemplified. These may be used alone or in combination of two or more thereof.

The organic solvent may include an organic compound which has sufficient solubility for the lithium salt and the additive, and is electrochemically stable without exhibiting reactivity in the secondary battery. For example, the organic solvent may include at least one of a carbonate solvent, an ester solvent, an ether solvent, a ketone solvent, an alcohol solvent and an aprotic solvent.

Examples of the carbonate solvent may include propylene carbonate (PC), ethylene carbonate (EC), butylene carbonate, diethyl carbonate (DEC), dimethyl carbonate (DMC), ethyl methyl carbonate (EMC), methyl propyl carbonate, ethyl propyl carbonate, dipropyl carbonate, vinylene carbonate and the like.

Examples of the ester solvent may include methyl acetate (MA), ethyl acetate (EA), n-propyl acetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), γ-butyrolactone (GBL), decanolide, valerolactone, mevalonolactone, caprolactone and the like.

Examples of the ether organic solvent may include dibutyl ether, tetraethylene glycol dimethyl ether (TEGDME), diethylene glycol dimethyl ether (DEGDME), dimethoxy ethane, diethoxy ethane, tetrahydrofuran (THF), 2-methyltetrahydrofuran and the like.

Examples of the ketone solvent may include cyclohexanone.

Examples of the alcohol solvent may include ethyl alcohol, isopropyl alcohol and the like.

Examples of the aprotic solvent may include dimethyl sulfoxide, acetonitrile, sulfolane, propylene sulfite and the like.

In some embodiments, the electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

For example, electrode tabs (cathode tabs and anode tabs) may protrude from the cathode current collector 105 and the anode current collector 125, respectively, and may extend to one side of the case 160. The electrode tabs may be welded together with the one side of the case 160 and connected to electrode leads (a cathode lead 107 and an anode lead 127) that extend or are exposed to the outside of the case 160.

For example, a pouch-type case, a prismatic case, a cylindrical case, or a coin-type case may be used as the case 160.

The above-described embodiments of the present disclosure include the following aspects and may be implemented through at least one of the following aspects.

A lithium secondary battery according to a first aspect of the present disclosure includes: a cathode including a lithium metal oxide having a form of secondary particles in which a plurality of primary particles are agglomerated, and a cathode active material doped with a cathode doping element; and an anode including an anode active material including a silicon-based active material containing a silicon oxide and a carbon-based active material, and disposed opposite the cathode, wherein the aspect ratio of the primary particles is 1.4 to 7.0, and the content of the silicon-based active material based on the total weight of the anode active material is 1 % by weight to 50 % by weight.

In the first aspect, according to a second aspect, the aspect ratio of the primary particles may be 1.53 to 5.02.

In the first aspect or the second aspect, according to a third aspect, the lithium metal oxide may include nickel, and the mole fraction of nickel based on the total molar amount of all elements excluding lithium and oxygen in the lithium metal oxide may be 0.5 to 0.99.

In any one of the first to third aspects, according to a fourth aspect, the mole fraction of nickel based on the total molar amount of all elements excluding lithium and oxygen in the lithium metal oxide may be 0.6 to 0.94.

In any one of the first to fourth aspects, according to a fifth aspect, the cathode doping element may include at least one of Al, Ti, Zr, Ba, Sr, W, Nb, Y, Mg, V, Ta, Mo, La and B.

In any one of the first to fifth aspects, according to a sixth aspect, the cathode doping element may include at least one of Ti, Zr, Ba, Sr, W, Nb and Ta.

In any one of the first to sixth aspects above, according to a seventh aspect, two or more of cathode doping elements may be used in combination.

In any one of the first to seventh aspects, according to an eighth aspect, the content of the cathode doping element based on the total weight of the lithium metal oxide may be 100 ppm to 15,000 ppm.

In any one of the first to eighth aspects, according to a ninth aspect, the content of the cathode doping element based on the total weight of the lithium metal oxide may be 2,000 ppm to 12,000 ppm.

In any one of the first to ninth aspects, according to a tenth aspect, the silicon oxide may be doped with an anode doping element.

In the tenth aspect, according to an eleventh aspect, the anode doping element may include at least one of Li, Mg, Al, Ca, Fe, Ti, P and V.

In the tenth or eleventh aspect, according to a twelfth aspect, the anode doping element may include at least one of Li and Mg.

In any one of the first to twelfth aspects above, according to a thirteenth aspect, the silicon oxide may include at least one of lithium silicate (Li₂SiO₃), lithium disilicate (Li₂Si₂O₅), magnesium silicate (MgSiO₃), and magnesium orthosilicate (Mg₂SiO₄).

In any one of the first to thirteenth aspects, according to a fourteenth aspect, the content of the silicon-based active material based on the total weight of the anode active material may be 1 % by weight to 40 % by weight.

Hereinafter, the embodiments of the present disclosure will be further described with reference to specific experimental examples. The examples and comparative examples included in the experimental examples are merely illustrative of the present disclosure and do not limit the scope of the appended claims. It will be apparent to those skilled in the art that various changes and modifications to the examples can be made within the scope and technical spirit of the present disclosure, and it is also understood that such changes and modifications fall within the scope of the appended claims.

### Examples and Comparative Examples

### Comparative Example 1

### (1) Preparation of Cathode

Secondary particles (hereinafter referred to as CAM-1) were prepared, in which primary particles with an aspect ratio of 2.58, not doped with a cathode doping element, and having a composition of LiNi_{0.5}Co_{0.2}Mn_{0.3}O₂ were agglomerated.

The aspect ratio was calculated by measuring the cross-section of the primary particle using a scanning electron microscope (SEM) and determining a ratio of the longest diameter length to the shortest diameter length among diameter lengths of the cross-sections of the primary particles.

A slurry was prepared by mixing CAM-1 as an active material, Denka Black as a conductive material, and polyvinylidene fluoride (PVDF) as a binder in a weight ratio of 92:5:3. The slurry was uniformly coated onto an aluminum foil having a thickness of 15 µm, dried, and then roll-pressed to prepare a cathode for a lithium secondary battery.

### (2) Preparation of Anode

An anode active material was prepared by mixing SiO as a silicon-based active material and artificial graphite as a carbon-based active material in a weight ratio of 1:9.

An anode slurry was prepared, which included 90 wt% of an anode active material, 4 wt% of KS6, a flake-type conductive material as a conductive agent, 3 wt% of styrene-butadiene rubber (SBR) as a binder, and 3 wt% of carboxymethyl cellulose (CMC) as a thickener. The anode slurry was uniformly coated onto a copper foil having a thickness of 15 µm, dried, and roll-pressed to prepare an anode for a lithium secondary battery.

### (3) Manufacture of Lithium Secondary Battery

The cathode and the anode prepared as described above were each cut to a predetermined size and stacked. A separator (polyethylene, thickness: 15 µm) was interposed between the cathode and the anode to form a cell, and the tab portions of the cathode and the tab portions of the anode were respectively welded. The assembly of the welded cathode/separator/anode was placed into a pouch, and three sides of the pouch were sealed, leaving one side open for electrolyte injection. At this time, the portion having the electrode tab was included in the sealed part. After injecting the electrolyte through the electrolyte injection side, the remaining electrolyte injection side was also sealed, and the cell was allowed to be impregnated for 12 hours or more to manufacture a lithium secondary battery.

A solution, prepared by adding 3 wt% fluoroethylene carbonate (FEC), 1 wt% of 1,3-propene sultone (PRS), and 0.5 wt% of lithium bis(oxalato)borate (LiBOB) to a 1 M LiPF₆ solution dissolved in a mixed solvent of EC/EMC/DEC (25/45/30: volume ratio), was used as the electrolyte.

Subsequently, pre-charging was performed for 36 minutes at a current (2.5 A) corresponding to 0.25C. After 1 hour, degassing was performed, followed by aging for 24 hours or more, and then formation charging and discharging were performed (charging conditions: CC-CV 0.2C, 4.2 V, 0.05C cut-off; discharging conditions: CC 0.2C, 2.5 V cut-off). Thereafter, standard charging and discharging were performed (charging conditions: CC-CV 0.5C, 4.2 V, 0.05C cut-off; discharging conditions: CC 0.5C, 2.5 V cut-off).

### Examples 1 to 7 and Comparative Examples 2 to 7

Lithium secondary batteries were manufactured in the same manner as in Comparative Example 1, except that the composition of the cathode active material and the type and content of the cathode doping element were changed as shown in Table 1 below.

### Experimental Example

### (1) Evaluation of Room-Temperature (25 °C) Cycle Life Characteristics

After 500 cycles of repeated charging (CC-CV 0.5C 4.2 V 0.05C cut-off) and discharging (CC 0.5C 2.75V cut-off) were performed on the lithium secondary batteries manufactured according to the examples and comparative examples, the discharge capacity at the 500th cycle was determined by calculating the discharge capacity at the 500th cycle as a percentage (%) of the discharge capacity at the first cycle.

Room-temperature cycle life characteristic (%) = (Discharge capacity at 50th cycle / Discharge capacity at 1st cycle) × 100

### (2) Evaluation of Output Characteristics

The discharge output characteristics of the lithium secondary batteries manufactured according to the examples and comparative examples were measured using a hybrid pulse power characterization (HPPC) method based on the FreedomCar Battery Test Manual.

The evaluation results are shown in Table 1 below.

**[TABLE 1]**

| | Cathode active material abbreviation | Ni/Co/Mn (mol ratio) | Cathode doping element | Doping amount (ppm) | Aspect ratio | Anode active material mixing ratio (Carbon-based active material / Silicon-based active material) (wt%) | Cycle life character istics (%) | Output characte ristics (W/kg) |
|---|---|---|---|---|---|---|---|---|
| Example 1 | CAM-8 | 50/20/30 | Al | 2,000 | 2.58 | 90/10 | 90.7 | 2,784 |
| Example 2 | CAM-9 | 60/20/20 | Al | 2,000 | 2.58 | 90/10 | 92.7 | 2,801 |
| Example 3 | CAM-10 | 70/15/15 | Al | 2,000 | 2.58 | 90/10 | 96.6 | 2,827 |
| Example 4 | CAM-11 | 80/10/10 | Al | 2,000 | 2.58 | 90/10 | 80.7 | 2,851 |
| Example 5 | CAM-12 | 90/5/5 | Al | 2,000 | 2.58 | 90/10 | 75.3 | 2,906 |
| Example 6 | CAM-13 | 94/3/3 | Al | 2,000 | 2.58 | 90/10 | 71.9 | 2,990 |
| Example 7 | CAM-14 | 98/1/1 | Al | 2,000 | 2.58 | 90/10 | 68.2 | 3,005 |
| Comparative Example 1 | CAM-1 | 50/20/30 | - | - | 2.58 | 90/10 | 89.6 | 2,533 |
| Comparative Example 2 | CAM-2 | 60/20/20 | - | - | 2.58 | 90/10 | 85.4 | 2,565 |
| Comparative Example 3 | CAM-3 | 70/15/15 | - | - | 2.58 | 90/10 | 78.6 | 2,589 |
| Comparative Example 4 | CAM-4 | 80/10/10 | - | - | 2.58 | 90/10 | 72.4 | 2,618 |
| Comparative Example 5 | CAM-5 | 90/5/5 | - | - | 2.58 | 90/10 | 66.8 | 2,666 |
| Comparative Example 6 | CAM-6 | 94/3/3 | - | - | 2.58 | 90/10 | 62.5 | 2,733 |
| Comparative Example 7 | CAM-7 | 98/1/1 | - | - | 2.58 | 90/10 | 56.4 | 2,754 |

Referring to Table 1, in Examples 1 to 7 containing cathode doping elements, the cycle life characteristic was 68.2% or more, and the output characteristic was 2,784 W/kg or more.

FIGS. 3A and 3B are scanning electron microscope (SEM) images of cross-sections of any two cathode active material particles among the cathode active material particles according to Example 5, respectively. Referring to FIGS. 3A and 3B, it can be seen that when LiNi_{0.9}Co_{0.05}Mn_{0.05}O₂, which has an aspect ratio of 2.58 and is doped with Al at a content of 2,000 ppm, is used as primary particles, the primary particles stably agglomerate to form secondary particles.

In Comparative Examples 1 to 7, which did not contain the cathode doping element, the cycle life characteristics and output characteristics were degraded compared to the examples in which other conditions were maintained the same.

### Examples 8 to 36 and Comparative Examples 8 to 13

Lithium secondary batteries were manufactured in the same manner as Comparative Example 1, except that the type and content of the cathode doping element and the aspect ratio were changed as shown in Table 2 below.

**[TABLE 2]**

| | Cathode active material abbreviation | Ni/Co/Mn (mol ratio) | Cathode doping element | Doping amount (ppm) | Aspect ratio | Anode active material mixing ratio (Carbon-based active material / Silicon-based active material) (wt%) | Cycle life characteristics (%) | Output characteristics (W/kg) |
|---|---|---|---|---|---|---|---|---|
| Example 8 | CAM-19 | 95/5/5 | Al | 100 | 1.42 | 90/10 | 62.6 | 2,685 |
| Example 9 | CAM-20 | 95/5/5 | Al | 100 | 1.53 | 90/10 | 64.8 | 2,679 |
| Example 10 | CAM-21 | 95/5/5 | Al | 100 | 2.58 | 90/10 | 67.5 | 2,674 |
| Example 11 | CAM-22 | 95/5/5 | Al | 100 | 5.02 | 90/10 | 71.2 | 2,671 |
| Example 12 | CAM-23 | 95/5/5 | Al | 100 | 6.51 | 90/10 | 73.3 | 2,540 |
| Example 13 | CAM-24 | 95/5/5 | Al | 300 | 1.42 | 90/10 | 62.7 | 2,865 |
| Example 14 | CAM-25 | 95/5/5 | Al | 300 | 1.53 | 90/10 | 69.6 | 2,862 |
| Example 15 | CAM-26 | 95/5/5 | Al | 300 | 2.58 | 90/10 | 73.2 | 2,853 |
| Example 16 | CAM-27 | 95/5/5 | Al | 300 | 5.02 | 90/10 | 77.9 | 2,850 |
| Example 17 | CAM-28 | 95/5/5 | Al | 300 | 6.51 | 90/10 | 80.8 | 2,653 |
| Example 18 | CAM-29 | 95/5/5 | Al | 2,000 | 1.42 | 90/10 | 62.8 | 2,920 |
| Example 19 | CAM-30 | 95/5/5 | Al | 2,000 | 1.53 | 90/10 | 71.0 | 2,918 |
| Example 20 | CAM-31 | 95/5/5 | Al | 2,000 | 5.02 | 90/10 | 80.9 | 2,901 |
| Example 21 | CAM-32 | 95/5/5 | Al | 2,000 | 6.51 | 90/10 | 83.7 | 2,746 |
| Example 22 | CAM-33 | 95/5/5 | Al | 4,000 | 1.42 | 90/10 | 62.9 | 2,943 |
| Example 23 | CAM-34 | 95/5/5 | Al | 4,000 | 1.53 | 90/10 | 72.3 | 2,942 |
| Example 24 | CAM-35 | 95/5/5 | Al | 4,000 | 2.58 | 90/10 | 76.6 | 2,933 |
| Example 25 | CAM-36 | 95/5/5 | Al | 4,000 | 5.02 | 90/10 | 83.7 | 2,928 |
| Example 26 | CAM-37 | 95/5/5 | Al | 4,000 | 6.51 | 90/10 | 86.7 | 2,815 |
| Example 27 | CAM-38 | 95/5/5 | Al | 12,000 | 1.42 | 90/10 | 63.0 | 2,891 |
| Example 28 | CAM-39 | 95/5/5 | Al | 12,000 | 1.53 | 90/10 | 72.8 | 2,890 |
| Example 29 | CAM-40 | 95/5/5 | Al | 12,000 | 2.58 | 90/10 | 78.1 | 2,879 |
| Example 30 | CAM-41 | 95/5/5 | Al | 12,000 | 5.02 | 90/10 | 85.2 | 2,878 |
| Example 31 | CAM-42 | 95/5/5 | Al | 12,000 | 6.51 | 90/10 | 87.5 | 2,712 |
| Example 32 | CAM-43 | 95/5/5 | Al | 15,000 | 1.42 | 90/10 | 63.1 | 2,734 |
| Example 33 | CAM-44 | 95/5/5 | Al | 15,000 | 1.53 | 90/10 | 72.9 | 2,730 |
| Example 34 | CAM-45 | 95/5/5 | Al | 15,000 | 2.58 | 90/10 | 78.3 | 2,719 |
| Example 35 | CAM-46 | 95/5/5 | Al | 15,000 | 5.02 | 90/10 | 85.2 | 2,717 |
| Example 36 | CAM-47 | 95/5/5 | Al | 15,000 | 6.51 | 90/10 | 87.4 | 2,543 |
| Comparative Example 8 | CAM-15 | 95/5/5 | - | - | 1.42 | 90/10 | 62.5 | 2,677 |
| Comparative Example 9 | CAM-16 | 95/5/5 | - | - | 1.53 | 90/10 | 64.3 | 2,675 |
| Comparative Example 10 | CAM-17 | 95/5/5 | - | - | 5.02 | 90/10 | 70.3 | 2,661 |
| Comparative Example 11 | CAM-18 | 95/5/5 | - | - | 6.51 | 90/10 | 72.2 | 2,506 |
| Comparative Example 12 | CAM-92 | 95/5/5 | Al | 2,000 | 1.05 | 90/10 | 60.1 | 2,930 |
| Comparative Example 13 | CAM-93 | 95/5/5 | Al | 2,000 | 7.05 | 90/10 | 84.7 | 2,650 |

Referring to Table 2, in Examples 8 to 36, which contain a cathode doping element, have an aspect ratio of 1.4 to 7.0, and a cathode doping element content of 100 ppm to 15,000 ppm, the cycle life characteristic was 62.6% or more, and the output characteristic was 2,540 W/kg or more.

FIGS. 4A and 4B are scanning electron microscope (SEM) images of cross-sections of any two cathode active material particles among the cathode active material particles according to Example 18. Referring to FIGS. 4A and 4B, it can be seen that when LiNi_{0.9}Co_{0.05}Mn_{0.05}O₂, which has an aspect ratio of 1.42 and is doped with Al at a content of 2,000 ppm, is used as primary particles, the primary particles stably agglomerate to form secondary particles.

FIGS. 5A and 5B are scanning electron microscope (SEM) images of cross-sections of any two cathode active material particles among the cathode active material particles according to Example 21. Referring to FIGS. 5A and 5B, it can be seen that when LiNi_{0.9}Co_{0.05}Mn_{0.05}O₂, which has an aspect ratio of 6.51 and is doped with Al at a content of 2,000 ppm, is used as primary particles, the primary particles stably agglomerate to form secondary particles.

In Examples 19 to 21, 23 to 26, and 28 to 31, in which the aspect ratio is 1.53 to 6.51 and the cathode doping element content is 2,000 ppm to 12,000 ppm, the cycle life characteristics and output characteristics were further improved.

In Comparative Examples 8 to 11, which do not contain the cathode doping element, the cycle life characteristics and output characteristics were degraded compared to the examples in which other conditions were maintained the same.

In Comparative Example 12, which includes the cathode doping element but has an aspect ratio of less than 1.4, the cycle life characteristics were degraded compared to the examples in which other conditions were maintained the same.

In Comparative Example 13, which includes the doping element but has an aspect ratio exceeding 7.0, the output characteristics were degraded compared to the examples in which other conditions were maintained the same.

### Examples 37 to 80

Lithium secondary batteries were manufactured in the same manner as in Comparative Example 1, except that the type and content of the cathode doping elements were changed as shown in Table 3 below.

**[TABLE 3]**

| | Cathode active material abbreviati on | Ni/Co/ Mn (mol ratio) | Cathode doping element | Doping amount (ppm) | Aspect ratio | Anode active material mixing ratio (Carbon-based active material / Silicon-based active material) (wt%) | Cycle life charact eristics (%) | Output characte ristics (W/kg) |
|---|---|---|---|---|---|---|---|---|
| Example 37 | CAM-48 | 90/5/5 | Ti | 2,000 | 2.58 | 90/10 | 75.6 | 2,933 |
| Example 38 | CAM-49 | 90/5/5 | Ti | 4,000 | 2.58 | 90/10 | 77.6 | 2,999 |
| Example 39 | CAM-50 | 90/5/5 | Zr | 2,000 | 2.58 | 90/10 | 75.5 | 2,959 |
| Example 40 | CAM-51 | 90/5/5 | Zr | 4,000 | 2.58 | 90/10 | 78.1 | 3,039 |
| Example 41 | CAM-52 | 90/5/5 | Ba | 2,000 | 2.58 | 90/10 | 75.8 | 2,946 |
| Example 42 | CAM-53 | 90/5/5 | Ba | 4,000 | 2.58 | 90/10 | 78.8 | 3,039 |
| Example 43 | CAM-54 | 90/5/5 | Sr | 2,000 | 2.58 | 90/10 | 76.0 | 2,906 |
| Example 44 | CAM-55 | 90/5/5 | Sr | 4,000 | 2.58 | 90/10 | 78.9 | 2,981 |
| Example 45 | CAM-56 | 90/5/5 | W | 2,000 | 2.58 | 90/10 | 76.6 | 2,973 |
| Example 46 | CAM-57 | 90/5/5 | W | 4,000 | 2.58 | 90/10 | 78.7 | 3,050 |
| Example 47 | CAM-58 | 90/5/5 | Nb | 2,000 | 2.58 | 90/10 | 75.3 | 2,906 |
| Example 48 | CAM-59 | 90/5/5 | Nb | 4,000 | 2.58 | 90/10 | 77.8 | 2,951 |
| Example 49 | CAM-60 | 90/5/5 | Y | 2,000 | 2.58 | 90/10 | 74.9 | 2,879 |
| Example 50 | CAM-61 | 90/5/5 | Y | 4,000 | 2.58 | 90/10 | 77.7 | 2,919 |
| Example 51 | CAM-62 | 90/5/5 | Mg | 2,000 | 2.58 | 90/10 | 73.9 | 2,826 |
| Example 52 | CAM-63 | 90/5/5 | Mg | 4,000 | 2.58 | 90/10 | 76.4 | 2,893 |
| Example 53 | CAM-64 | 90/5/5 | V | 2,000 | 2.58 | 90/10 | 74.1 | 2,933 |
| Example 54 | CAM-65 | 90/5/5 | V | 4,000 | 2.58 | 90/10 | 76.9 | 3,018 |
| Example 55 | CAM-66 | 90/5/5 | Ta | 2,000 | 2.58 | 90/10 | 76.3 | 2,906 |
| Example 56 | CAM-67 | 90/5/5 | Ta | 4,000 | 2.58 | 90/10 | 78.6 | 2,959 |
| Example 57 | CAM-68 | 90/5/5 | Mo | 2,000 | 2.58 | 90/10 | 74.0 | 2,879 |
| Example 58 | CAM-69 | 90/5/5 | Mo | 4,000 | 2.58 | 90/10 | 76.8 | 2,954 |
| Example 59 | CAM-70 | 90/5/5 | La | 2,000 | 2.58 | 90/10 | 75.2 | 2,933 |
| Example 60 | CAM-71 | 90/5/5 | La | 4,000 | 2.58 | 90/10 | 77.8 | 3,039 |
| Example 61 | CAM-72 | 90/5/5 | B | 2,000 | 2.58 | 90/10 | 75.4 | 2,879 |
| Example 62 | CAM-73 | 90/5/5 | B | 4,000 | 2.58 | 90/10 | 78.5 | 2,935 |
| Example 63 | CAM-74 | 90/5/5 | Al/Y | 1,000/1,000 | 2.58 | 90/10 | 80.0 | 3,119 |
| Example 64 | CAM-75 | 90/5/5 | Al/Y | 2,000/2,000 | 2.58 | 90/10 | 83.5 | 3,226 |
| Example 65 | CAM-76 | 90/5/5 | Zr/Mo | 1,000/1,000 | 2.58 | 90/10 | 80.3 | 3,146 |
| Example 66 | CAM-77 | 90/5/5 | Zr/Mo | 2,000/2,000 | 2.58 | 90/10 | 83.7 | 3,279 |
| Example 67 | CAM-78 | 90/5/5 | Sr/W | 1,000/1,000 | 2.58 | 90/10 | 79.6 | 3,226 |
| Example 68 | CAM-79 | 90/5/5 | Sr/W | 2,000/2,000 | 2.58 | 90/10 | 82.5 | 3,346 |
| Example 69 | CAM-80 | 90/5/5 | Nb/Ti | 1,000/1,000 | 2.58 | 90/10 | 78.4 | 3,066 |
| Example 70 | CAM-81 | 90/5/5 | Nb/Ti | 2,000/2,000 | 2.58 | 90/10 | 82.2 | 3,191 |
| Example 71 | CAM-82 | 90/5/5 | Mg/B | 1,000/1,000 | 2.58 | 90/10 | 79.4 | 3,053 |
| Example 72 | CAM-83 | 90/5/5 | Mg/B | 2,000/2,000 | 2.58 | 90/10 | 83.0 | 3,165 |
| Example 73 | CAM-84 | 90/5/5 | Ta/Ba | 1,000/1,000 | 2.58 | 90/10 | 81.0 | 3,071 |
| Example 74 | CAM-85 | 90/5/5 | Ta/Ba | 2,000/2,000 | 2.58 | 90/10 | 84.5 | 3,207 |
| Example 75 | CAM-86 | 90/5/5 | La/V | 1,000/1,000 | 2.58 | 90/10 | 81.4 | 3,109 |
| Example 76 | CAM-87 | 90/5/5 | La/V | 2,000/2,000 | 2.58 | 90/10 | 84.7 | 3,162 |
| Example 77 | CAM-88 | 90/5/5 | Ti/Sr/Y | 700/700/600 | 2.58 | 90/10 | 79.3 | 3,034 |
| Example 78 | CAM-89 | 90/5/5 | Ti/Sr/Y | 1,400/1,400/1,200 | 2.58 | 90/10 | 82.2 | 3,087 |
| Example 79 | CAM-90 | 90/5/5 | Al/Zr/W | 700/700/600 | 2.58 | 90/10 | 80.7 | 3,063 |
| Example 80 | CAM-91 | 90/5/5 | Al/Zr/W | 1,400/1,400/1,200 | 2.58 | 90/10 | 82.8 | 3,149 |

Referring to Table 3, in Examples 37 to 80, in which at least one of Al, Ti, Zr, Ba, Sr, W, Nb, Y, Mg, V, Ta, Mo, La and B was used as the cathode doping element and the cathode doping element content was 2,000 ppm to 4,000 ppm, the cycle life characteristic was 73.9% or more and the output characteristic was 2,826 W/kg or more. In Examples 37 to 48, 55, and 56, in which at least one of Ti, Zr, Ba, Sr, W, Nb and Ta was used as the cathode doping element, the cycle life characteristic and output characteristic were further improved.

In Examples 63 to 80, in which two or more cathode doping elements were used in combination, the cycle life characteristics and output characteristics were improved.

### Examples 81 to 86 and Comparative Examples 14 to 32

Lithium secondary batteries were manufactured in the same manner as Comparative Example 1, except that the type and content of the cathode doping element and the mixing ratio of the anode active material were changed as shown in Table 4 below.

**[TABLE 4]**

| | Cathode active material abbreviation | Ni/Co/Mn (mol ratio) | Cathode doping element | Doping amount (ppm) | Aspect ratio | Anode active material mixing ratio (Carbon-based active material / Silicon-based active material) (wt%) | Cycle life characteristics (%) | Output characteristics (W/kg) |
|---|---|---|---|---|---|---|---|---|
| Example 81 | CAM-12 | 95/5/5 | Al | 2,000 | 2.58 | 99/1 | 86.8 | 2,854 |
| Example 82 | CAM-12 | 95/5/5 | Al | 2,000 | 2.58 | 95/5 | 85.3 | 2,889 |
| Example 83 | CAM-12 | 95/5/5 | Al | 2,000 | 2.58 | 80/20 | 68.6 | 2,950 |
| Example 84 | CAM-12 | 95/5/5 | Al | 2,000 | 2.58 | 70/30 | 63.8 | 2,999 |
| Example 85 | CAM-12 | 95/5/5 | Al | 2,000 | 2.58 | 60/40 | 61.5 | 3,025 |
| Example 86 | CAM-12 | 95/5/5 | Al | 2,000 | 2.58 | *50*/*50* | 54.4 | 3,092 |
| Comparative Example 14 | CAM-5 | 95/5/5 | - | - | 2.58 | 100/0 | 90.9 | 2,565 |
| Comparative Example 15 | CAM-5 | 95/5/5 | - | - | 2.58 | 99.5/0.5 | 83.0 | 2,573 |
| Comparative Example 16 | CAM-5 | 95/5/5 | - | - | 2.58 | 99/1 | 81.3 | 2,589 |
| Comparative Example 17 | CAM-5 | 95/5/5 | - | - | 2.58 | 95/5 | 79.4 | 2,642 |
| Comparative Example 18 | CAM-5 | 95/5/5 | - | - | 2.58 | 80/20 | 59.7 | 2,693 |
| Comparative Example 19 | CAM-5 | 95/5/5 | - | - | 2.58 | 70/30 | 56.2 | 2,746 |
| Comparative Example 20 | CAM-5 | 95/5/5 | - | - | 2.58 | 60/40 | 54.2 | 2,773 |
| Comparative Example 21 | CAM-5 | 95/5/5 | - | - | 2.58 | *50*/*50* | 47.5 | 2,826 |
| Comparative Example 22 | CAM-5 | 95/5/5 | - | - | 2.58 | 40/60 | 44.5 | 2,879 |
| Comparative Example 23 | CAM-5 | 95/5/5 | - | - | 2.58 | 30/70 | 41.2 | 2,933 |
| Comparative Example 24 | CAM-5 | 95/5/5 | - | - | 2.58 | 20/80 | 37.7 | 2,986 |
| Comparative Example 25 | CAM-5 | 95/5/5 | - | - | 2.58 | 10/90 | 34.4 | 3,066 |
| Comparative Example 26 | CAM-5 | 95/5/5 | - | - | 2.58 | 0/100 | 27.4 | 3,119 |
| Comparative Example 27 | CAM-12 | 95/5/5 | Al | 2,000 | 2.58 | 40/60 | 47.7 | 3,147 |
| Comparative Example 28 | CAM-12 | 95/5/5 | Al | 2,000 | 2.58 | 30/70 | 44.0 | 3,202 |
| Comparative Example 29 | CAM-12 | 95/5/5 | Al | 2,000 | 2.58 | 20/80 | 39.9 | 3,266 |
| Comparative Example 30 | CAM-12 | 95/5/5 | Al | 2,000 | 2.58 | 10/90 | 36.3 | 3,348 |
| Comparative Example 31 | CAM-12 | 95/5/5 | Al | 2,000 | 2.58 | 0/100 | 28.6 | 3,406 |
| Comparative Example 32 | CAM-12 | 95/5/5 | Al | 2,000 | 2.58 | 99.5/0.5 | 83.9 | 2,839 |

Referring to Table 4, in Examples 81 to 86, in which an anode active material including the cathode doping element was used and the content of the silicon-based active material based on the total weight of the anode active material was 1 wt% to 50 wt% (the content of the carbon-based active material based on the total weight of the anode active material was 50 wt% to 99 wt%), the cycle life characteristic was 54.4% or more, and the output characteristic was 2,854 W/kg or more.

In Examples 83 to 85, in which the content of the silicon-based active material based on the total weight of the anode active material was 10 wt% to 40 wt% (the content of the carbon-based active material based on the total weight of the anode active material was 60 wt% to 90 wt%), the cycle life characteristic was 60% or more, and the output characteristic was 2,900 W/kg or more.

In Comparative Examples 14 to 20, which do not contain the cathode doping element, the cycle life characteristics and output characteristics were degraded compared to the examples in which other conditions were maintained the same

In Comparative Examples 22 to 26, which use an anode active material that does not contain the cathode doping element and contains a silicon-based active material content exceeding 50 wt% based on the total weight of the anode active material, the cycle life characteristics were less than 45%.

In Comparative Examples 27 to 31, which include the cathode doping element but in which the content of the silicon-based active material based on the total weight of the anode active material exceeds 50 wt%, the cycle life characteristics were less than 50%.

In Comparative Example 32, which includes the cathode doping element but in which the content of the silicon-based active material based on the total weight of the anode active material is less than 1 wt%, the output characteristics were degraded compared to the examples in which other conditions were maintained the same.

### Examples 87 and 88, and Comparative Examples 33 and 34

Lithium secondary batteries were manufactured in the same manner as in Comparative Example 1, except that the content of the cathode doping element and the type of silicon-based active material were changed as shown in Table 5 below.

**[TABLE 5]**

| | Cathode active material abbreviation | Ni/Co/Mn (mol ratio) | Cathode doping element | Doping amount (ppm) | Aspect ratio | Anode active material mixing ratio (Carbon-based active material / Silicon-based active material) (wt%) | Type of silicon-based active material | Cycle life characteristics (%) | Output characteristics (W/kg) |
|---|---|---|---|---|---|---|---|---|---|
| Example 87 | CAM-12 | 95/5/5 | Al | 2,000 | 2.58 | 90/10 | Li_{0.52}SiO | 77.0 | 2,884 |
| Example 88 | CAM-12 | 95/5/5 | Al | 2,000 | 2.58 | 90/10 | Mg_{0.16}SiO | 79.9 | 2,916 |
| Comparative Example 33 | CAM-5 | 95/5/5 | - | - | 2.58 | 90/10 | Li_{0.52}SiO | 68.9 | 2,655 |
| Comparative Example 34 | CAM-5 | 95/5/5 | - | - | 2.58 | 90/10 | Mg_{0.16}SiO | 71.9 | 2,661 |

Referring to Table 5, in Examples 87 and 88, which used SiO (Li_{0.52}SiO or Mg_{0.16}SiO) doped with Li or Mg as the silicon-based active material including the cathode doping element, the cycle life characteristics were 77.0% or more and the output characteristics were 2,884 W/kg or more. Referring to Tables 1 and 5, in Examples 87 and 88, which used SiO (Li_{0.52}SiO or Mg_{0.16}SiO) doped with Li or Mg as the silicon-based active material, the cycle life characteristics and output characteristics were improved compared to Example 5, which maintained the same conditions other than using SiO as the silicon-based active material.

In Comparative Examples 33 and 34, in which SiO (Li_{0.52}SiO or Mg_{0.16}SiO) doped with Li or Mg was used as the silicon-based active material but which do not include the cathode doping element, the cycle life characteristics and output characteristics were degraded compared to the examples in which other conditions were maintained the same.

## Claims

1. A lithium secondary battery comprising:
a cathode comprising a lithium metal oxide having a form of secondary particles in which a plurality of primary particles are agglomerated, and a cathode active material doped with a cathode doping element; and
an anode comprising an anode active material including a silicon-based active material containing a silicon oxide and a carbon-based active material, and disposed opposite the cathode,
wherein the aspect ratio of the primary particles is 1.4 to 7.0, and
the content of the silicon-based active material based on the total weight of the anode active material is 1 % by weight to 50 % by weight.

2. The lithium secondary battery according to claim 1, wherein the aspect ratio of the primary particles is 1.53 to 5.02.

3. The lithium secondary battery according to claim 1, wherein the lithium metal oxide comprises nickel, and
the mole fraction of nickel based on the total molar amount of all elements excluding lithium and oxygen in the lithium metal oxide is 0.5 to 0.99.

4. The lithium secondary battery according to claim 3, wherein the mole fraction of nickel based on the total molar amount of all elements excluding lithium and oxygen in the lithium metal oxide is 0.6 to 0.94.

5. The lithium secondary battery according to claim 1, wherein the cathode doping element comprises at least one of Al, Ti, Zr, Ba, Sr, W, Nb, Y, Mg, V, Ta, Mo, La and B.

6. The lithium secondary battery according to claim 5, wherein the cathode doping element comprises at least one of Ti, Zr, Ba, Sr, W, Nb and Ta.

7. The lithium secondary battery according to claim 5, wherein two or more of cathode doping elements are used in combination.

8. The lithium secondary battery according to claim 1, wherein the content of the cathode doping element based on the total weight of the lithium metal oxide is 100 ppm to 15,000 ppm.

9. The lithium secondary battery according to claim 8, wherein the content of the cathode doping element based on the total weight of the lithium metal oxide is 2,000 ppm to 12,000 ppm.

10. The lithium secondary battery according to claim 1, wherein the silicon oxide is doped with an anode doping element.

11. The lithium secondary battery according to claim 10, wherein the anode doping element comprises at least one of Li, Mg, Al, Ca, Fe, Ti, P and V.

12. The lithium secondary battery according to claim 11, wherein the anode doping element comprises at least one of Li and Mg.

13. The lithium secondary battery according to claim 10, wherein the silicon oxide comprises at least one of lithium silicate (Li₂SiO₃), lithium disilicate (Li₂Si₂O₅), magnesium silicate (MgSiO₃), and magnesium orthosilicate (Mg₂SiO₄).

14. The lithium secondary battery according to claim 1, wherein the content of the silicon-based active material based on the total weight of the anode active material is 1 % by weight to 40 % by weight.
